# EUROPÄISCHE PATENTANMELDUNG

(11) **EP 0 874 478 A2**
(43) Veröffentlichungstag der Anmeldung: **28.10.1998**
(21) Anmeldenummer: 98440059.8
(22) Anmeldetag: 24.03.1998
(51) Int. Cl.: H04B 10/08

(54) **Prüfverfahren für ein Netzelement eines optischen Nachrichtenübertragungssystems und Netzelement**

(30) Priorität: 26.03.1997 DE 19712750
(71) Anmelder: Alcatel Alsthom Compagnie Generale d'Electricité, 75088 Paris (FR)
(72) Erfinder: Anhorn, Jürgen, Dipl.-Ing., 70806 Kornwestheim (DE)
(74) Vertreter: Schätzle, Albin, Dipl.-Phys.

(57) **Zusammenfassung**

Ein Netzelemente (NE) eines optischen Nachrichtenübertragungssystems besteht aus einem Gestell, in welches verschiedene Baugruppen (D1-D3, S1-S8, X1-X12) und mindestens eine Ersatzbaugruppe (DS, SS) eingeschoben werden können, die durch Lichtwellenleiter optisch verschaltet werden. ein Teil der Baugruppen (D1-D3, DS, S1-S8, SS) enthält jeweils einen Laser.

Es wird ein Verfahren zum Prüfen dieser optischen Verbindungen angegeben, bei dem nacheinander die Laser der Baugruppen (D1-D3, DS, S1-S8, SS) aus- und eingeschaltet werden und mit Hilfe von Detektoren (DET), die die Baugruppen (S1-S8, SS, X1-X12) mit optischen Eingängen (PORT1, PORT2) aufweisen, an den nachfolgenden Baugruppen festgestellt wird, ob ein Signalverlust auftritt. In einem Speicher in dem Netzelement (NE) kann ein Programmodul vorgesehen sein, welches bei seiner Ausführung das Prüfverfahrens durchführt.

## Beschreibung

Die Erfindung betrifft ein Verfahren zum Prüfen der optischen Verbindungen von Baugruppen eines für ein optisches Nachrichtenübertragungsystem vorgesehenen Netzelementes.

Solche Netzelemente bestehen üblicherweise aus einem Gestell, in welches je nach Ausbaugrad und Verwendung verschiedene Baugruppen eingeschoben werden können, die dann durch ein Bussystem an der Rückseite des Gestelles elektrisch miteinander verbunden sind. Die optischen Verbindungen zwischen den einzelnen Baugruppen werden gängigerweise durch Lichtwellenleiter (Glasfasern) hergestellt. Weiter enthält ein solches Netzelement üblicherweise eine Steuerbaugruppe, die Alarmmeldungen aller Baugruppen empfängt und über das Bussystem gezielt Steuerbefehle an einzelne Baugruppen geben kann.

Um die Betriebssicherheit eines solchen Netzelementes zu erhöhen, ist es zweckmäßig, von bestimmten, störanfälligen Baugruppen zusätzliche Ersatzbaugruppen vorzusehen und diese mit den anderen Baugruppen über optische Kreuzschalter zu verschalten. Damit eine Ersatzschaltung mit diesen Ersatzbaugruppen im Störfall jedoch funktionieren kann, ist es notwendig, die genaue optische Verschaltung zwischen allen Baugruppen zu kennen, die ja über einzelne Lichtwellenleiter hergestellt ist.

Aufgabe der Erfindung ist es daher, ein Verfahren zum Prüfen der optischen Verbindungen zwischen Baugruppen eines Netzelementes anzugeben, das es ermöglicht, bei einem installierten Netzelement die Verschaltung der Baugruppen herauszufinden. Eine weitere Aufgabe der Erfindung ist es, ein Netzelement zur Durchführung des Prüfverfahrens anzugeben.

Die Aufgabe wird hinsichtlich des Verfahrens gelöst durch die Merkmale des Anspruchs 1 und hinsichtlich des Netzelementes durch die Merkmale des Anspruchs 5. Vorteilhafte Ausgestaltungen sind den abhängigen Patentansprüchen zu entnehmen.

Ein Vorteil des erfindungsgemäßen Prüfverfahrens ist es, daß zyklische Alarmmeldungen einzelner Baugruppen, die beispielsweise alle 10 sec erfolgen können, die Testergebnisse nicht beeinflussen uns verfälschen.

Ein weiterer Vorteil des beschriebenen Verfahrens ist, daß die Ausschaltzeiten der Baugruppen so kurz wie möglich gehalten werden. Dadurch werden auch die Ausschaltzeiten an den Ausgängen so kurz wie möglich gehalten. Wird ein teilausgebautes Netzelement, d.h. ein Netzelement mit freien Einschubplätzen für weitere Baugruppen, im laufenden Betrieb erweitert, kann das erfindungsgemäße Prüfverfahren weitgehend störungsfrei angewendet werden.

Anhand der Figuren 1 bis 8 wird im Folgenden ein Ausführungsbeispiel der Erfindung erläutert. Es zeigen:
- Figur 1: Eine erste Baugruppe "optischer Kreuzschalter",
- Figur 2: eine zweite Baugruppe ,,optischer Sender",
- Figur 3: eine dritter Baugruppe ,,optischer Verstärker",
- Figur 4: ein Blockschaltbild eines aus verschiedenen Baugruppen aufgebauten Netzelementes mit zusätzlichen Ersatzbaugruppen,
- Figur 5: das Netzelement aus Figur 4, mit einer aufgrund einer Störung realisierten Ersatzschaltung,
- Figur 6: das Netzelement aus Figur 4 in der Ausgangslage für das Prüfverfahren,
- Figur 7: das Netzelement aus Figur 4 während einer ersten Phase des Prüfverfahrens und
- Figur 8: das Netzelement aus Figur 4 während einer zweiten Phase des Prüfverfahrens.

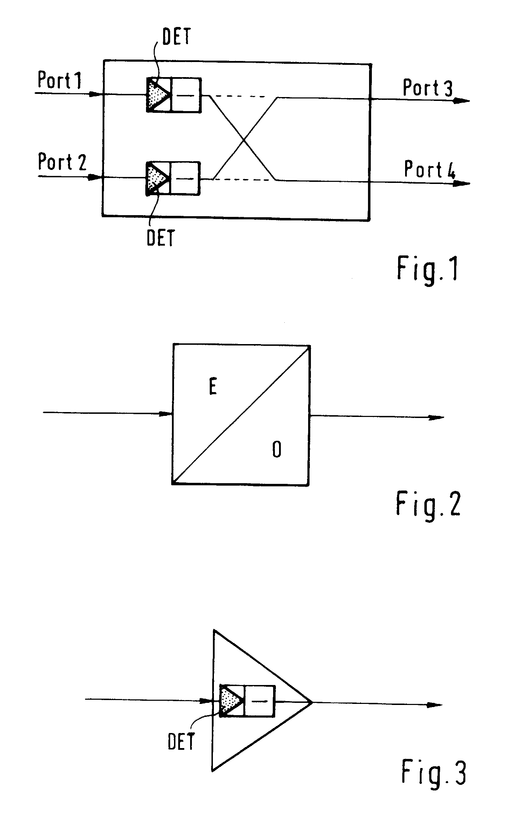

In Figur 1 ist ein optischer Kreuzschalter dargestellt, der als eine Baugruppe in einem Netzelement des Ausführungsbeispieles Verwendung findet. Er hat zwei Eingänge PORT1, PORT2, die gekreuzt oder ungekreuzt mit den beiden Ausgängen PORT3 und PORT4 verbunden werden können. An den beiden Eingängen PORT1, PORT2 sind Detektionseinrichtungen DET vorgesehen, mit deren Hilfe festgestellt werden kann, ob und an welchem Eingang ein optisches Signal anliegt. Es kann sich bei diesen Detektionseinrichtung DET beispielsweise um über Koppler mit dem Eingang verbundene Photodioden handeln.

Der Schalter ist in gekreuzter Schalterstellung gezeigt. Dies bedeutet, daß der Eingang PORT1 mit dem Ausgang PORT4 und der Eingang PORT2 mit dem Ausgang PORT3 verbunden sind. Die ungekreuzte Schalterstellung ist mit gestrichelten Linien angedeutet. Die möglichen Alarmsignale, die der optische Kreuzschalter an eine Steuereinheit melden kann, sind: ,,Signal an PORT X OK" und ,,Signalausfall an PORT Y" (wobei X, Y für PORT1 und PORT2 stehen). Mögliche Befehle, die der optische Kreuzschalter von der Steuereinheit erhalten kann sind: ,,Schalterstellung gekreuzt!" und ,,Schalterstellung ungekreuzt!".

Eine zweite Baugruppe, die in dem Netzelement des Ausführungsbeispiels Verwendung findet, ist in Figur 2 gezeigt. Es handelt sich um einen optischen Sender, der mit Hilfe eines Lasers elektrische Eingangssignale in optische Ausgangssignale wandelt. Einen möglichen Alarm, den der optische Sender der Steuereinheit melden könnte, gibt es in diesem Fall nicht. Mögliche Befehle von der Steuereinheit an den optischen Sender sind: ,,Laser an!" und ,,Laser aus!".

Eine dritte in dem Netzelement des Ausführungsbeispiels verwendete Baugruppe ist ein in Figur 3 gezeigter optischer Verstärker. Er dient dazu, die optischen Ausgangssignale der optischen Sender zu verstärken. Er verfügt wie der optische Kreuzschalter über eine Detektionseinrichtung DET zur Überwachung der optischen Eingangssignale. Mögliche Alarme des optischen Verstärkers sind: ,,Eingang hat Signal" und ,,Eingang hat kein Signal".

Der optische Verstärker verfügt über einen Laser, der beispielsweise als Pumplaser für einen optisch aktiven Wellenleiterbereich vorgesehen ist. Z.B. kann es sich bei dem optischen Verstärker um einen Erbium-dotierten Faserverstärker handeln, oder auch um einen Halbleiterverstärker. Mögliche Befehle der Steuereinheit an den optischen Verstärker sind daher: ,,Laser an!" und ,,Laser aus!".

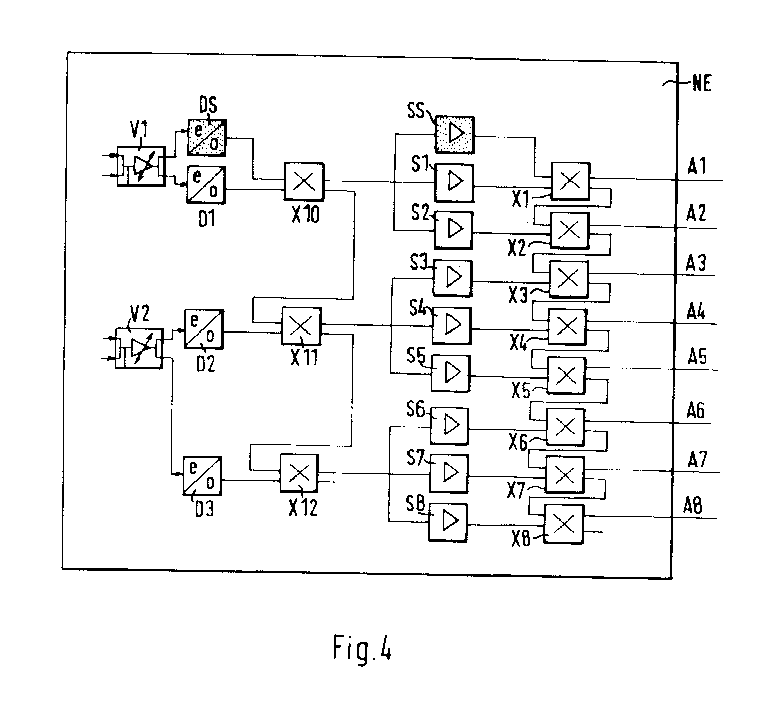

Das Netzelement NE des Ausführungsbeispiels ist in Figur 4 abgebildet. Es enthält vier Baugruppen D1-D3, DS von Typ optischer Sender, die über drei Baugruppen X10-X12 vom Typ optischer Kreuzschalter mit neun Baugruppen S1-S8, SS vom Typ optischer Verstärker über Lichtwellenleiter verbunden sind. Die neun optischen Verstärker S1-S8, SS sind mit weiteren Lichtwellenleitern über acht weitere Baugruppen X1-X8 mit acht Ausgängen A1 -A8 des Netzelementes verbunden. Die optischen Sender D1-D3, DS werden von elektrischen Vorverstärkern V1, V2 angesteuert.

Einer der vier optischen Sender ist als Ersatzbaugruppe DS vorgesehen, ebenso wie einer der neun optischen Verstärker SS. Diese beiden Ersatzbaugruppen DS, SS sind im normalen, ungestörten Betrieb des Netzelementes NE deaktiviert, d.h. ihre Laser sind ausgeschaltet. Um dies anzudeuten, sind die beiden Ersatzbaugruppen DS, SS grau schraffiert unterlegt. Die optischen Kreuzschalter X1-X12 stehen bei abgebildeten Verschaltung bei ungestörtem Betrieb alle auf gekreuzter Schalterstellung.

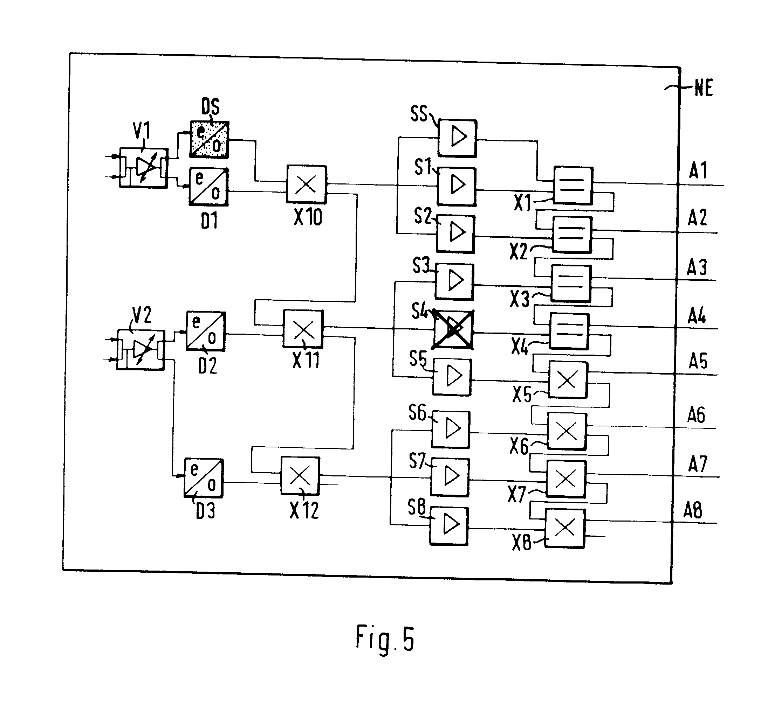

Der gestörte Betrieb des Netzelementes NE ist in Figur 5 abgebildet. Der optische Verstärker S4 ist ausgefallen, und so hat das Netzelement NE auf eine Ersatzschaltung unter Einbeziehung des als Ersatzbaugruppe vorgesehenen optischen Verstärkers SS umgeschaltet. Dazu müssen wie in der Figur gezeigt, die optischen Kreuzschalter X1-X4 auf ungekreuzte Schalterstellung umgeschaltet und die Ersatzbaugruppe SS aktiviert werden.

Um nun zu wissen, welche optischen Kreuzschalter im Falle einer Störung umgeschaltet werden müssen, muß die Verschaltung aller Baugruppen genau bekannt sein. Die Baugruppen werden beispielsweise als Einschübe in einem gemeinsamen Gestell des Netzelementes NE montiert und ihre physikalische Position ist über eine Steckplatznummer und über eine Baugruppenträgernummer exakt lokalisierbar. Die optische Verschaltung über die Lichtwellenleiter erfolgt dann jedoch unabhängig von der physikalischen Position. Es ist also mittels des erfindungsgemäßen Prüfverfahrens eine Zuordnung zwischen der physikalischen Position im Gestell und der logischen Position in der in den Figuren 4 und 5 gezeigten Verschaltung zu ermitteln.

Erfindungsgemäß wird dies dadurch erreicht, daß die Laser der Baugruppen nacheinander aus- und wieder eingeschaltet werden und daß an den nachfolgenden Baugruppen mittels der Detektionseinrichtungen an den optischen Eingängen festgestellt wird, ob ein Signalverlust auftritt

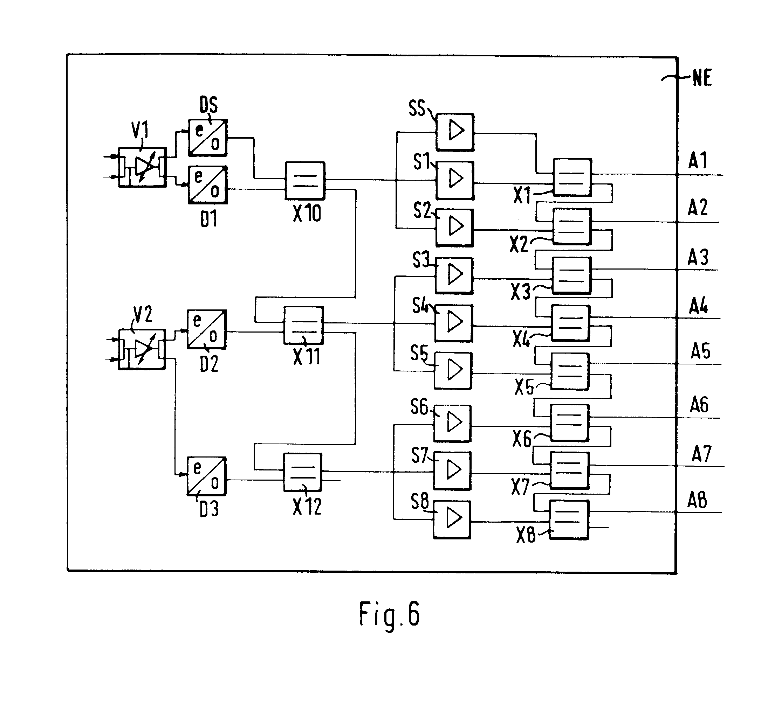

Die Ausgangslage für das Prüfverfahren des Netzelementes NE ist in Figur 6 abgebildet. Dazu werden alle optischen Kreuzschalter X1-X12 auf ungekreuzte Schalterstellung geschaltet und alle Laser der optischen Sender D1-D3, DS und der optischen Verstärker S1-S8, SS eingeschaltet. Es liegt nach diesen Schritten der in Tabelle 1 beschriebene Zustand vor:

**Tabelle 1:**

| Ausgangslage für das Prüfverfahren | | | |
|---|---|---|---|
| | Befehl | Alarm | |
| alle optischen Sender | Laser an | - | |
| alle optischen Verstärker | Laser an | Signal OK | |
| alle optischen Kreuzschalter | ungekreuzte Schalterstellung | Signal PORT1 OK | Signal PORT2 OK |

Anschließend werden für jeden der optischen Verstärker S1-S8, SS die folgenden Unterschritte durchgeführt: Der Laser des betreffenden optischen Verstärkers wird ausgeschaltet und es wird geprüft, welcher optische Kreuzschalter an welchem Eingang einen Signalverlust meldet. Bei dem Netzelement NE des Ausführungsbeispieles können dies entweder ein optischer Kreuzschalter sein oder auch zwei. Die optischen Kreuzschalter, die einen Signalverlust melden werden in eine Tabelle eingetragen. Anschließend wird der Laser des betreffenden optischen Verstärkers wieder eingeschaltet und mit dem nächsten optischen Verstärker fortgefahren.

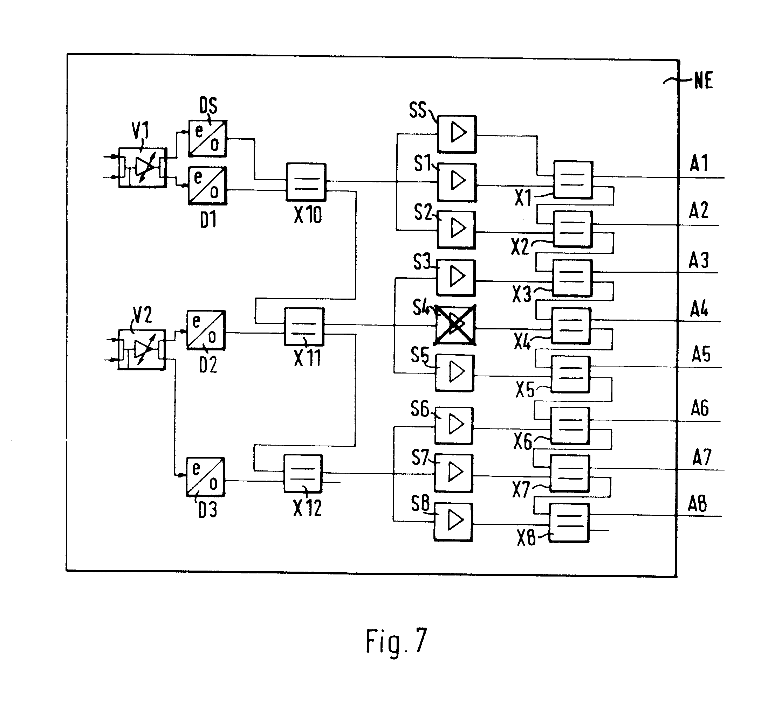

In Figur 7 ist das Netzelement NE während eines dieser Prüfschritte dargestellt. Der Laser des optischen Verstärkers S4 wurde ausgeschaltet. Daraufhin meldet der optische Kreuzschalter X4 Signalausfall an dem zweiten Eingang PORT2 und der optische Kreuzschalter X5 meldet Signalausfall an seinem ersten Eingang PORT1. In die Tabelle wird dies in die Zeile des Verstärkers S4 eingetragen, zusammen mit dessen physikalischer Position. Nachdem die Prüfschritte für alle optischen Verstärker abgeschlossen sind, ist folgende Tabelle erhalten:

**Tabelle 2:**

| Prüfergebnisse nach den Prüfschritten für die optischen Verstärker S1-S8, SS | | |
|---|---|---|
| physikalische Position der optischen Verstärker S1-S8, SS | optischer Kreuzschalter mit Signalverlust an PORT1 | optischer Kreuzschalter mit Signalverlust an PORT2 |
| P_Sa | P_Xa | - |
| P_Sb | P_Xb | P_Xa |
| P_Sc | P_Xc | P_Xb |
| P_Sd | P_Xd | P_Xc |
| P_Se | P_Xe | P_Xd |
| P_Sf | P_Xf | P_Xe |
| P_Sg | P_Xg | P_Xf |
| P_Sh | P_Xh | P_Xg |
| P_Si | - | P_Xh |

Es bedeuten dabei P_{_}Sa - P_{_}Si die physikalischen Positionen der optischen Verstärker S1-S8, SS, die ja über die Steckplatznummer des Netzelementes NE eindeutig bekannt sind, und P_{_}Xa - P_{_}Xh die physikalischen Positionen der optischen Kreuzschalter X1-X8.

Die Auswertung dieser Prüfergebnisse wird wie folgt durchgeführt: Es ist bekannt, daß nur der als Ersatzbaugruppe vorgesehene optische Verstärker SS in Verbindung mit dem optischen Kreuzschalter X1 keinen Signalverlust an einem zweiten Eingang PORT2 eines Kreuzschalters liefert. Es wird also aus der Tabelle der Eintrag herausgesucht, bei dem kein Kreuzschalter einen Signalverlust an PORT2 meldet. Damit ist herausgefunden, daß der optische Verstärker SS die physikalische Position P_{_}Sa besitzt, und daß der optische Kreuzschalter X1 die physikalische Position P_{_}Xa besitzt.

Nun wird der Eintrag in der Tabelle gesucht, bei dem der Kreuzschalter X1 mit der Position P_{_}Xa einen Signalverlust an PORT2 meldet. Damit ist die Zuordnung der optischen Verstärkers S1 zu der physikalischen Position P_{_}Sb und des Kreuzschalters X2 zu der Position P_{_}Xb nachgewiesen. Auf diese Weise wird nun der nächste Kreuzschalter und der nächste Verstärker identifiziert, indem nach dem Eintrag in der Tabelle gesucht wird, bei dem der Kreuzschalter X2 mit der Position P_{_}Xb einen Signalverlust an PORT2 meldet. Aus diesem Eintrag gelingt die Zuordnung von Kreuzschalter X3 zu Position P_{_}Xc und von Verstärker S2 zu P_{_}Sc. Dieses Vorgehen wird fortgesetzt, bis alle acht Kreuzschalter X1-X8 und alle Verstärker S1-S8, SS identifiziert, d.h. einer physikalischen Position zugeordnet sind. Damit ist die erste Phase des Prüfverfahrens abgeschlossen.

In einem weiteren Schritt werden nun die identifizierten optischen Kreuzschalter X1-X8 auf gekreuzte Schalterstellung geschaltet und der als Ersatzbaugruppe vorgesehene optische Verstärker SS ausgeschaltet. Die ungekreuzte Schalterstellung kann nun als Filter für die noch nicht identifizierten optischen Kreuzschalter X10-X12 dienen.

In einer zweiten Phase des Prüfverfahrens werden nun für jeden optischen Sender D1-D3, DS folgende Unterschritte durchgeführt: Der Laser des betreffenden optischen Senders wird ausgeschaltet und es wird geprüft, welcher optische Kreuzschalter an welchem Eingang einen Signalverlust meldet. Dabei ist zu beachten, daß nur die optischen Kreuzschalter berücksichtigt werden, die noch nicht identifiziert sind, die also noch auf ungekreuzter Schalterstellung stehen. Die optischen Kreuzschalter, die einen Signalverlust melden werden in eine Tabelle eingetragen. Ebenso werden die optischen Verstärker, die einen Signalausfall melden in die Tabelle eingetragen. Anschließend wird der Laser des betreffenden optischen Senders wieder eingeschaltet und mit dem nächsten optischen Sender fortgefahren.

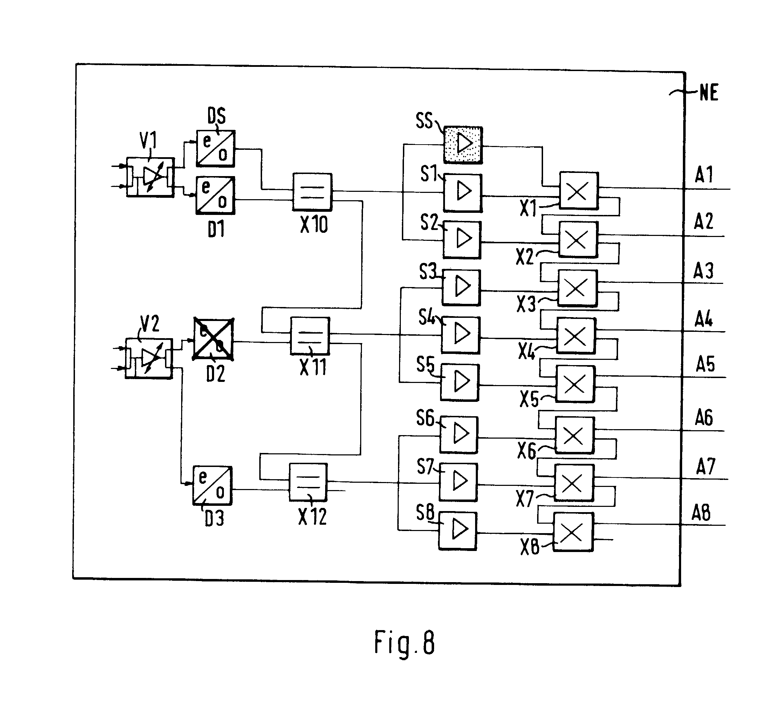

In der Figur 8 ist das Netzelement NE des Ausführungsbeispieles während dieser zweiten Phase dargestellt. Die optischen Kreuzschalter X1-X8 stehen auf gekreuzter Schalterstellung und der optische Verstärker SS ist ausgeschaltet. Ebenso ist der Laser von dem optischen Sender D2 abgeschaltet. Der optische Kreuzschalter X11 meldet daher an seinem zweiten Eingang PORT2, daß ein Signalausfall vorliegt und der optische Kreuzschalter X12 meldet, daß an PORT1 kein Signal mehr anliegt. Nachdem die Prüfschritte für alle optischen Sender abgeschlossen sind, ist folgende Tabelle erhalten:

**Tabelle 2:**

| Prüfergebnisse nach den Prüfschritten für die optischen Sender D1-D3, DS | | | |
|---|---|---|---|
| physikalische Position des optischen Senders | Kreuzschalter mit Signalausfall an PORT1 | Kreuzschalter mit Signalausfall an PORT2 | optische Verstärker mit Signalausfall |
| P_Da | P_Xm | - | SS, S1, S2 |
| P_Db | P_Xn | P_Xm | S3, S4, S5 |
| P_Dc | P_Xo | P_Xn | S6, S7, S8 |
| P_Dd | - | P_Xo | - |

Es bedeuten dabei P_{_}Da - P_{_}Dd die physikalischen Positionen der optischen Sender D1-D3, DS und P_{_}Xm - P_Xo die physikalischen Positionen der optischen Kreuzschalter X10-X12.

Die Auswertung dieser Prüfergebnisse dieser zweiten Phase wird wie folgt durchgeführt: Es ist bekannt, daß nur der als Ersatzbaugruppe vorgesehene optische Sender DS in Verbindung mit dem optischen Kreuzschalter Xl0 keinen Signalverlust an einem zweiten Eingang PORT2 liefert. Es wird also aus der Tabelle der Eintrag herausgesucht, bei dem kein Kreuzschalter einen Signalverlust an PORT2 meldet. Damit ist herausgefunden, daß der optische Sender DS die physikalische Position P_{_}Da besitzt, und daß der optische Kreuzschalter Xlo die physikalische Position P_{_}Xm besitzt.

Nun wird der Eintrag in der Tabelle gesucht, bei dem der Kreuzschalter X10 mit der Position P_{_}Xm einen Signalverlust an PORT2 meldet. Damit ist die Zuordnung der optischen Senders D1 zu der physikalischen Position P_{_}Db und des Kreuzschalters X11 zu der Position P_Xn nachgewiesen. Auf diese Weise wird nun der nächste Kreuzschalter und der nächste Verstärker identifiziert, indem nach dem Eintrag in der Tabelle gesucht wird, bei dem der Kreuzschalter X11 mit der Position P_Xn einen Signalverlust an PORT2 meldet. Aus diesem Eintrag gelingt die Zuordnung von Kreuzschalter X12 zu Position P_Xo und von Verstärker D2 zu P_Dc. Aus der letzten Zeile der Tabelle, in der der optische Kreuzschalter X12 auf Position P Xo einen Signalverlust an PORT2 meldet, ergibt sich die Zuordnung von D3 zu P_Dd. Damit sind nun alle optischen Sender D1-D3, DS und die optischen Kreuzschalter X10-X12 identifiziert, d.h. einer physikalischen Position in dem Gestell des Netzelementes NE zugeordnet.

Zusätzlich kann nun noch überprüft werden, ob bei den optischen Sendern DS, D1, D2 jeweils drei optische Verstärker einen Signalverlust gemeldet haben. Falls dies nicht der Fall ist, liegt in dem Ausführungsbeispiel eine Teilbestückung des Netzelementes NE vor, oder es ist eine fehlerhafte optische Verbindung zwischen den Baugruppen hergestellt.

Um nach Abschluß des Prüfverfahrens wieder Betriebsbereitschaft herzustellen, werden alle Kreuzschalter auf gekreuzte Schalterstellung geschaltet und der als Ersatzbaugruppe vorgesehene optische Sender DS wird deaktiviert.

Die Verwendung von optischen Kreuzschaltern zur Verschaltung von Ersatzbaugruppen in einem Netzelement ist bevorzugt, da diese eine besonders schnelle und fehlerunanfällige Umschaltung von Normalbetrieb auf eine Ersatzschaltung gestatten. Dennoch ist auch der Einsatz anderer Schalter, beispielsweise von optischen Umschaltern oder einfachen optischen An/Aus-Schaltern möglich und auch hier ist das erfindungsgemäße Prüfverfahren anwendbar.

Von besonderem Vorteil ist es, in einer Steuereinheit des Netzelementes NE einen Speicher mit einem Programmodul vorzusehen, welches bei seiner Ausführung auf einem Mikroprozessor der Steuereinheit das Prüfverfahren durchführt, die Laser der einzelnen Baugruppen aus- und wieder einschaltet und die Alarmmeldungen der nachfolgenden Baugruppen überwacht, protokolliert und auswertet. So kann das Prüfverfahren von der Ferne über das Nachrichtenübertragungssystem gestartet werden. Vorteilhafterweise wird das Programmodul in einem Festwertspeicher gespeichert, beispielsweise in einem EPROM oder einem EEPROM.

Bei dem Netzelement NE kann es sich um ein Netzelement für ein SDH- oder SONET-System handeln (SDH: Synchrone Digitale Hierarchie, SONET: Synchronous Optical Network), beispielsweise um einen Crossconnect einen Leitungsmultiplexer oder einen Add/Drop-Multiplexer. Das Netzelement NE kann jedoch auch ein Sender für ein optisches Verteilnetz mit bidirektionaler oder auch unidirektionaler Nachrichtenübertragung sein.

## Patentansprüche

1. Verfahren zum Prüfen der optischen Verbindungen zwischen Baugruppen (D1-D3, DS, S1-S8, SS, X1-X12) eines Netzelementes (NE) für ein optisches Nachrichtenübertragungssystem, wobei das Netzelement (NE) mehrere Baugruppen und mindestens eine Ersatzbaugruppe (DS, SS) aufweist, die untereinander mit Lichtwellenleitern verbunden sind und wobei zumindest ein Teil der Baugruppen (D1-D3, DS, S1-S8, SS) jeweils einen Laser enthält, **dadurch gekennzeichnet**, daß
- die Baugruppen (S1-S8, SS, X1-X12) mit optischen Eingängen (PORT1, PORT2) Detektoren (DET) aufweisen, mit denen geprüft werden kann, ob ein optisches Signal an dem Eingang anliegt, und daß
- zur Durchführung der Prüfung nacheinander die Laser der Baugruppen (D1-D3, DS, S1-S8,SS) aus- und eingeschaltet werden und an den nachfolgenden Baugruppen festgestellt wird, ob ein Signalverlust auftritt.

2. Verfahren nach Anspruch 1, zur Prüfung optischer Verbindungen zwischen Baugruppen (D1-D3, DS, S1-S8, SS, X1-X12) eines Netzelementes (NE), das jeweils mindestens eine der folgenden Baugruppen enthält:
Optischer Sender (D1-D3, DS), optischer Verstärker (S1-S8, SS), optischer Kreuzschalter (X1-X12) und bei dem die Baugruppen optischer Sender (D1, - D3, DS) und optischer Verstärker (S1-S8, SS) jeweils einen Laser enthalten, der zur Durchführung der Prüfung aus- und eingeschaltet wird.

3. Verfahren nach Anspruch 2, bei dem die Laser der optischen Sender (D1-D3, DS) und der optischen Verstärker (S1-S8, SS) nacheinander aus- und eingeschaltet werden und festgestellt wird, an welchem der Eingänge (PORT1, PORT2) eines optischen Kreuzschalters (X1-X12) ein Signalverlust auftritt.

4. Verfahren nach Anspruch 2 wobei das Netzelement (NE) je einen optischen Verstärker (SS) und einen optischen Sender (DS) als Ersatzbaugruppen aufweist und bei dem nacheinander folgende Schritte durchgeführt werden:
a) Einschalten der Laser aller Baugruppen (D1-D3, DS, S1-S8, SS),
b) Schalten aller Kreuzschalter (X1-X12) auf ungekreuzte Schalterstellung,
c) Wiederholen folgender Unterschritte für jeden optischen Verstärker (S1-S8, SS):
i) Laser des jeweiligen optischen Verstärkers (S4) ausschalten,
ii) Feststellen derjenigen optischen Kreuzschalter (X4, X5), an deren zumindest einem Eingang (PORT1, PORT2) ein Signalverlust auftritt und
iii) Anschalten des jeweiligen Lasers,
d) Ausschalten des Lasers des als Ersatzbaugruppe vorgesehenen optischen Verstärkers (DS),
e) Schalten aller mit einem Ausgang (A1 -A8) des Netzelementes (NE) verbundenen Kreuzschalter (X1-X8) auf gekreuzte Schalterstellung,
f) Wiederholen folgender Unterschritte für jeden optischen Sender (D1- - D3, DS):
i) Laser des jeweiligen optischen Senders (D2) ausschalten,
ii) Feststellen derjenigen Kreuzschalter (X11, X12) mit ungekreuzter Schalterstellung, an deren zumindest einem Eingang (PORT1, PORT2) ein Signalverlust auftritt,
iii) Anschalten des jeweiligen Lasers, und
g) Ermitteln der Verbindungen zwischen den einzelnen Baugruppen (D1-D3, DS, S1-S8, SS, X1-X12) aus den festgestellten Daten.

5. Netzelement (NE) für ein optisches Nachrichtenübertragungssystem, wobei das Netzelement (NE) mehrere Baugruppen (D1-D3, DS, S1 -S8, SS, X1-X12) und mindestens eine Ersatzbaugruppe (SS; DS) aufweist, die untereinander mit Lichtwellenleitern verbunden sind und wobei zumindest ein Teil der Baugruppen (D1-D3, DS, S1-S8, SS) jeweils einen Laser enthält, **dadurch gekennzeichnet**, daß
die Baugruppen (S1-S8, SS, X1-X12) mit optischen Eingängen (PORT1, PORT2) Detektoren (DET) aufweisen, mit denen geprüft werden kann, ob ein optisches Signal anliegt, und daß
in einem Speicher des Netzelementes (NE) ein Programmodul zur Durchführung einer Prüfung der optischen Verbindungen zwischen den Baugruppen (D1-D3, DS, S1-S8, SS, X1-X12) enthalten ist, welches bei einer Ausführung auf einem Mikroprozessor einer Steuereinheit des Netzelementes (NE) die Baugruppen so ansteuert, daß zur Prüfung nacheinander die Laser der Baugruppen (D1-D3, DS, S1-S8, SS) aus- und eingeschaltet werden und an den nachfolgenden Baugruppen festgestellt wird, ob ein Signalverlust auftritt.

6. Netzelement nach Anspruch 5, bei dem jeweils mindestens eine der folgenden Baugruppen enthalten ist: Optischer Sender (D1-D3, DS), optischer Verstärker (S1-S8, SS), optischer Kreuzschalter (X1-X12) und bei dem die Baugruppen optischer Sender (D1-D3, DS) und optischer Verstärker (S1-S8, SS) jeweils einen Laser enthalten, der zur Durchführung der Prüfung aus- und eingeschaltet wird.

7. Netzelement (NE) nach Anspruch 5, bei dem das Programmodul in einem Festwertspeicher abgespeichert ist.
